# EUROPEAN PATENT APPLICATION

(11) **EP 1 860 907 A1**
(43) Date of publication of application: **28.11.2007**
(21) Application number: 06728892.8
(22) Date of filing: 10.03.2006
(51) Int. Cl.: H04Q 7/38, H04B 7/26, H04M 3/56, H04M 11/00, H04N 1/00, H04N 1/32

(54) **BROADCAST SYSTEM AND DATA TRANSMISSION METHOD**

(30) Priority: 14.03.2005 JP 2005071418
(71) Applicant: NEC Corporation, Minato-ku Tokyo 108-8001 (JP)
(72) Inventor: MIYASHITA, Shigehiro, Tokyo, 1088001 (JP)
(74) Representative: Glawe, Delfs, Moll
(86) International application number: PCT/JP2006/304724
(87) International publication number: WO 2006/098235

(57) **Abstract**

A terminal device (30a) transmits image data to an image server (10) (S603). The image server generates the identification information of the image data. A PTT server (20) distributes the generated identification information to all terminal devices (30a - 30n). If the terminal device does not hold the distributed identification information, the identification information is transmitted to the image server (S611). The image server transmits image data associated with the received identification information to the terminal device as the identification information transmission source (S615). Upon receiving the image data, the terminal device outputs the terminal device (S617). This allows to exchange data except voice data.

## Description

### Technical Field

The present invention relates to a broadcasting system for executing communication except voice communication and a data transmission method.

### Background Art

There is conventionally a broadcasting system using PoC (Push to talk over Cellular) in mobile communication. The PoC is a system like a walkie-talkie which mainly uses a mobile communication network and performs a one-way call.

The PoC allows the user to put talking partners into groups, like IM (Instant Messaging), and confirm their states. Hence, in the PoC, the user can start a call by selecting the other party (one person or a group) in a call state and pressing the talk button. That is, the PoC corresponds to the transceiver mode of a portable phone. It is unnecessary to dial the number of the call destination. The time required for connection is short. The user can communicate with a plurality of places simultaneously.

The fee of PoC is often lower than that of normal call. The operation procedure is as follows. The user opens a call destination list prepared separately from a normal phone book, selects a partner, and presses the talk button. If the user selects a plurality of call destinations, multipoint communication is executed.

Japanese Patent Laid-Open No. 2004-110270 discloses a PoC system of a prior art. In this system, a user terminal, an information transmission server system of a kindergarten, an information input terminal of an operator, and a mobile terminal of a courtesy car are connected via a network. The information transmission server includes boards that carry the event schedule of the kindergarten, messages to parents, important messages, messages to be exchanged with the parents, absence notes, and the position and the estimated time of arrival of the courtesy car, a Web communication means, a mail means, a computer telephony transmission means, and a processing means for providing browsing services of the boards and registering information by way of Web sites and mails. A moving image distribution server receives moving images of the children and kindergarten from a monitor camera and records them. The moving image distribution server distributes current moving images or past moving images to the user terminal as requested. This allows to distribute the moving images of the children and kindergarten or store and provide them as souvenir images.

### Disclosure of Invention

### Problem to be Solved by the Invention

However, the above-described prior art has the following problem.

In the conventional PoC, only voice data is broadcast to group participants. Since only voice data is exchanged, the expressions and situations of the participants are hard to grasp. That is, it is difficult to make the group participants communicate with each other by transmitting data except voice data.

It is therefore an object of the present invention to allow a broadcasting system to exchange data except voice data.

### Means of Solution to the Problem

In order to achieve the above object, according to the present invention, there is provided a broadcasting system characterized by comprising a server, and a plurality of terminal devices connected to the server via a network, each of the terminal devices comprising a terminal-side data acquisition unit which acquires, from the server, data, except voice data, transmitted from another terminal device, and a data output unit which outputs the data acquired by the terminal-side data acquisition unit.

According to the present invention, there is also provided a server apparatus characterized by comprising a data acquisition unit which acquires data, except voice data, transmitted from one of a plurality of terminal devices connected via a network, an identification information generation unit which generates identification information of the data acquired by the data acquisition unit, an identification information distribution unit which distributes the identification information generated by the identification information generation unit to each of the terminal devices, an identification information reception unit which receives identification information transmitted from the terminal device when the terminal device does not hold the identification information, and a data transmission unit which transmits data associated with the identification information received by the identification information reception unit to the terminal device as a transmission source of the identification information.

According to the present invention, there is also provided a terminal device characterized by comprising a data acquisition unit which acquired, from a server connected via a network, data, except voice data, transmitted from another terminal device, and a data output unit which outputs the data acquired by the data acquisition unit.

According to the present invention, there is also provided a data transmission method characterized by comprising the steps of causing one terminal device to acquire, from a server connected via a network, data, except voice data, transmitted from another terminal device, and outputting the acquired data.

### Effect of the Invention

According to the present invention, communication can be done by exchanging data except voice data.

### Brief Description of Drawings

Fig. 1 is a block diagram showing the schematic arrangement of a broadcasting system according to an embodiment of the present invention;
Fig. 2 is a block diagram showing the function of an image server in Fig. 1;
Fig. 3 is a block diagram showing the function of a PTT server in Fig. 1;
Fig. 4 is a block diagram showing the function of a terminal device in Fig. 1;
Fig. 5 is a flowchart illustrating a processing operation of causing the image server to receive image data from the terminal device and assign identification information;
Fig. 6 is a flowchart illustrating a processing operation of outputting image data to the terminal device;
Fig. 7 is a block diagram showing an arrangement example of the image server in Fig. 1;
Fig. 8 is a block diagram showing an arrangement example of the PTT server in Fig. 1; and
Fig. 9 is a block diagram showing an arrangement example of the terminal device in Fig. 1. Best Mode for Carrying Out the Invention

An embodiment of the present invention will be described below in detail with reference to the accompanying drawings.

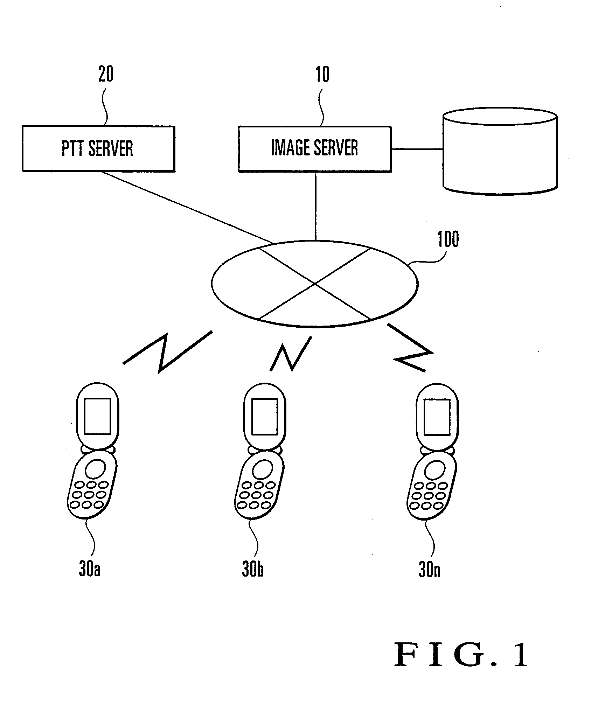

Referring to Fig. 1, a broadcasting system according to this embodiment includes an image server (first server) 10, PTT server (second server) 20, and terminal devices 30a, 30b, and 30n. These apparatuses operate on the basis of program control and connect to each other via a network 100. The network 100 is preferably, e.g., an existing telephone network but can be an arbitrary network. For example, an optical fiber, Internet, public line, LAN (Local Area Network), and ADSL (Asymmetric Digital Subscriber Line) are also usable. The communication method can be either wired or wireless. The terminal devices 30a, 30b, and 30n will be sometimes represented by a terminal device 30.

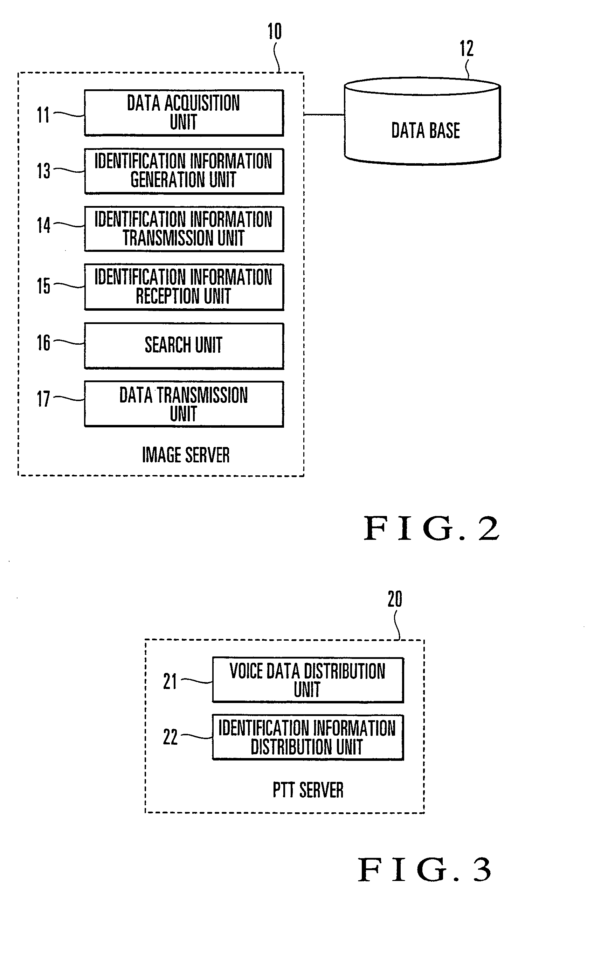

Referring to Fig. 2, the image server 10 is an information processing apparatus, e.g., a workstation used as a PTT platform. The image server 10 includes a data acquisition unit (server-side data acquisition unit) 11, database 12, identification information generation unit 13, identification information transmission unit 14, identification information reception unit 15, search unit 16, and data transmission unit 17.

The identification information generation unit 13 generates identification information corresponding to data received from the terminal device 30. The identification information uniquely identifies the data and can be the telephone number of the terminal device 30, a password, or a URL. When a URL is used, existing Web-related technologies such as a Web browser are usable so that the user can widely utilize the data.

The image server 10 handles image data. Image data here is an example of data except voice data and can include not only still images and moving images but also any arbitrary data such as a PDF file and music data.

Referring to Fig. 3, the PTT server 20 is an information processing apparatus used as a PTT platform to implement a PoC. The PTT server 20 includes a voice data distribution unit 21 and an identification information distribution unit 22.

The voice data distribution unit 21 has a voice distribution function used by a conventional PoC.

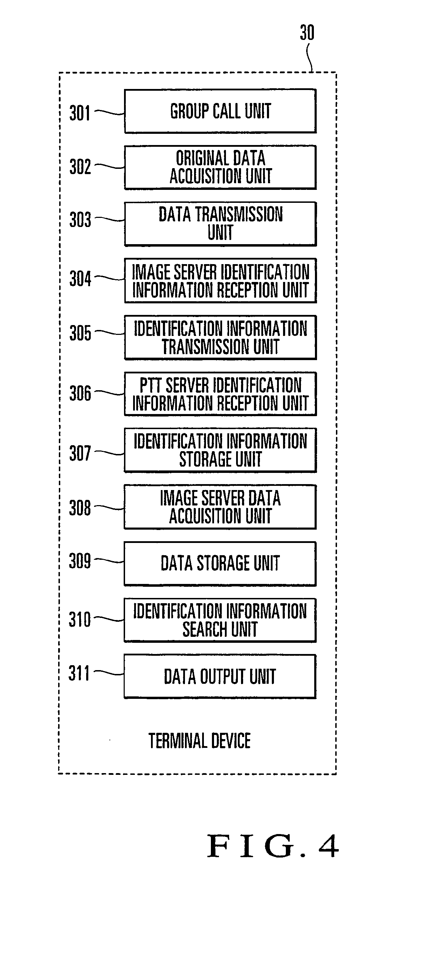

Referring to Fig. 4, the terminal device 30 is a client using the PoC service. The terminal device 30 is, e.g., a portable phone, PHS, or PDA (portable information terminal). The terminal device 30 includes a group call unit 301, original data acquisition unit 302, data transmission unit 303, image server identification information reception unit 304, identification information transmission unit 305, PTT server identification information reception unit 306, identification information storage unit 307, image server data acquisition unit (terminal-side data acquisition unit) 308, data storage unit 309, identification information search unit 310, and data output unit 311.

The group call unit 301 has a function of making a group call by voice data used by the conventional PoC.

The original data acquisition unit 302 has a function of transmitting data to the image server 10 and acquiring data that should finally be distributed to each terminal device. The original data acquisition unit 302 may have a function of causing, e.g., a camera mechanism to sense an image or acquiring data from a compact external storage medium. The original data acquisition unit 302 need only be able to acquire certain data such as image data or music data.

The identification information storage unit 307 and data storage unit 309 need not always be separate. That is, identification information and data which are stored in the identification information storage unit 307 and data storage unit 309, respectively, may be stored in a single table in correspondence with each other.

The data output unit 311 can have any form if it can output data. The data output unit 311 may be implemented by a mechanism which, e.g., displays an image or moving image on a predetermined display unit, outputs music from a loudspeaker, or transfers data that should undergo some process to another processing unit.

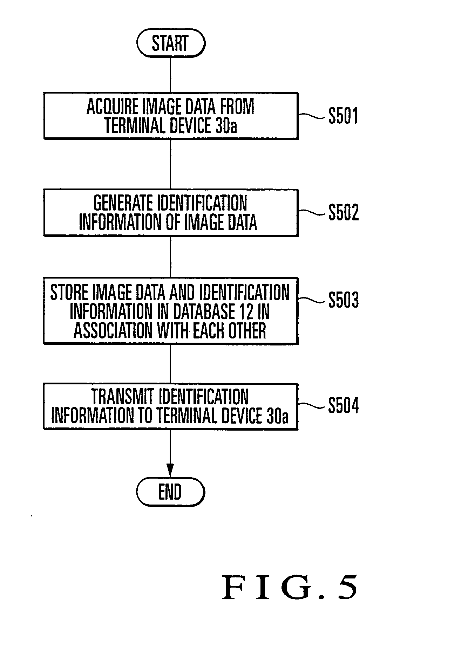

A processing operation of causing the image server 10 to receive image data as predetermined data from the terminal device 30 (terminal device 30a in this case) and assign identification information will be described next with reference to Fig. 5.

The data acquisition unit 11 of the image server 10 acquires, via the network 100, image data acquired by the original data acquisition unit 302 of the terminal device 30a and transmitted from the data transmission unit 303 (S501). The identification information generation unit 13 generates identification information capable of uniquely identifying the acquired image data (S502). The database 12 stores the generated identification information in association with the image data (S503). A predetermined table in the database 12 may store the identification information and data in a one-to-one correspondence. The identification information transmission unit 14 of the image server 10 transmits the generated identification information to the terminal device 30a as the image data transmission source (S504).

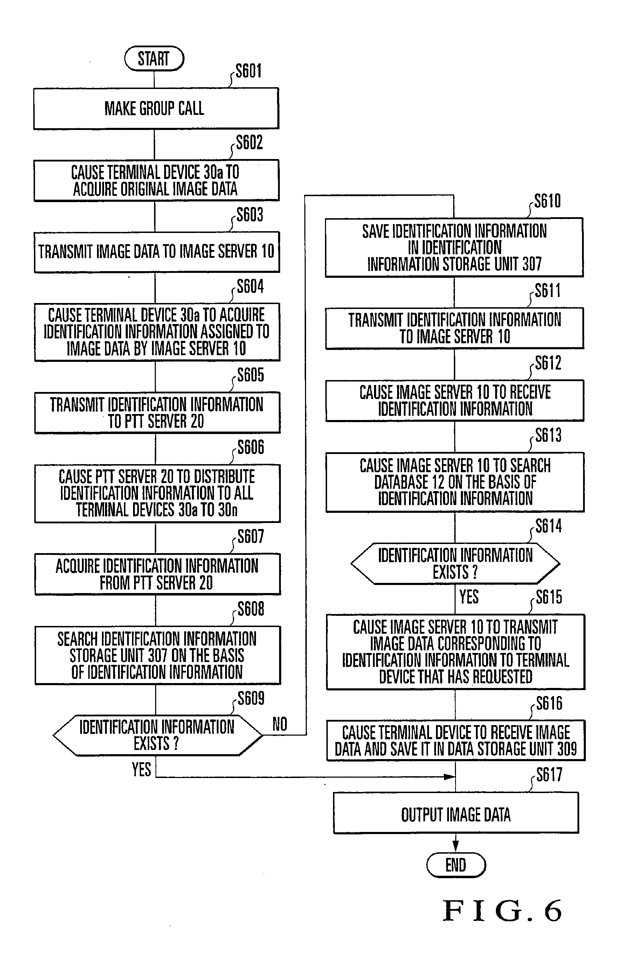

A processing operation of outputting image data as predetermined data to the terminal device 30 (terminal device 30b in this case) will be described next with reference to Fig. 6.

The terminal device 30a causes the group call unit 301 to receive voice data from the voice data distribution unit 21 of the PTT server 20 and make a group call (S601). The original data acquisition unit 302 of the terminal device 30a acquires image data (S602). The group call and image acquisition can be done at any timing, and their order is not particularly limited. The data transmission unit 303 of the terminal device 30a transmits the acquired image data to the data acquisition unit 11 of the image server 10 via the network 100 (S603).

The image data identification information reception unit 304 of the terminal device 30a receives image data identification information transmitted from the identification information transmission unit 14 of the image server 10 (S604). The identification information transmission unit 305 of the terminal device 30a transmits the identification information to the PTT server 20 via the network 100 (5605).

The identification information distribution unit 22 of the PTT server 20 distributes the identification information to all the terminal devices 30a, 30b, and 30n via the network 100 (S606). Hence, the identification information is distributed to even the terminal device 30a itself that has transmitted the original data.

The PTT server identification information reception unit 306 of the terminal device 30b acquires the identification information distributed from the PTT server 20 (S607). The identification information search unit 310 of the terminal device 30b searches the identification information storage unit 307 on the basis of the acquired identification information (S608). In the first data acquisition, the identification information storage unit 307 does not hold the identification information, as a matter of course. In the second or subsequent data acquisition, the identification information storage unit 307 already holds the identification information of the preceding time. Hence, data is output by using the identification information.

If the identification information exists (YES in S609), the data output unit 311 of the terminal device 30b outputs data associated with the identification information. The data is, e.g., displayed on a predetermined display unit. The identification information and data are stored in correspondence with each other, as described above. If the period or amount exceeds a predetermined value, an overwrite process may be done.

If the identification information does not exist (NO in S609), the identification information storage unit 307 saves the identification information (S610). The identification information transmission unit 305 of the terminal device 30 transmits the identification information to the image server 10 via the network 100 (S611).

The identification information reception unit 15 of the image server 10 receives the identification information (S612). The search unit 16 of the image server 10 searches the database 12 on the basis of the received identification information (S613). If the identification information exists (YES in S614), image data associated with the identification information is acquired. The data transmission unit 17 transmits the image data corresponding to the identification information to the terminal device 30b that has requested (S615).

The image server data acquisition unit 308 of the terminal device 30 acquires the image data via the network 100. The data storage unit 309 saves the image data (S616). The image data is saved in association with the identification information. The data output unit 311 of the terminal device 30 outputs the acquired image data (S617). The image data is, e.g., displayed on a predetermined display unit.

The terminal device 30b which has acquired the identification information may suspend data acquisition to, e.g., save the data packet fee. Hence, the terminal device 30b may either automatically execute identification information acquisition and data acquisition as a series of processes or start the process only after the user inputs a separate instruction by, pressing a predetermined button.

According to this embodiment, the user of the group call can refer to not only voice data but also images. For example, the user can proceed with work while observing the portrait of a speaker on a conference or confirming the on-site situation on a field of construction work. This allows smooth communication using information except voice data.

This embodiment is a preferred embodiment of the present invention, and various changes and modifications can be made within the spirit and scope of the invention. For example, a process of implementing the function of the system may be executed by causing a computer included in each of the image server 10, PTT server 20, and terminal device 30 of the embodiment to read out and execute a program to implement the function of the apparatus. This will briefly be described.

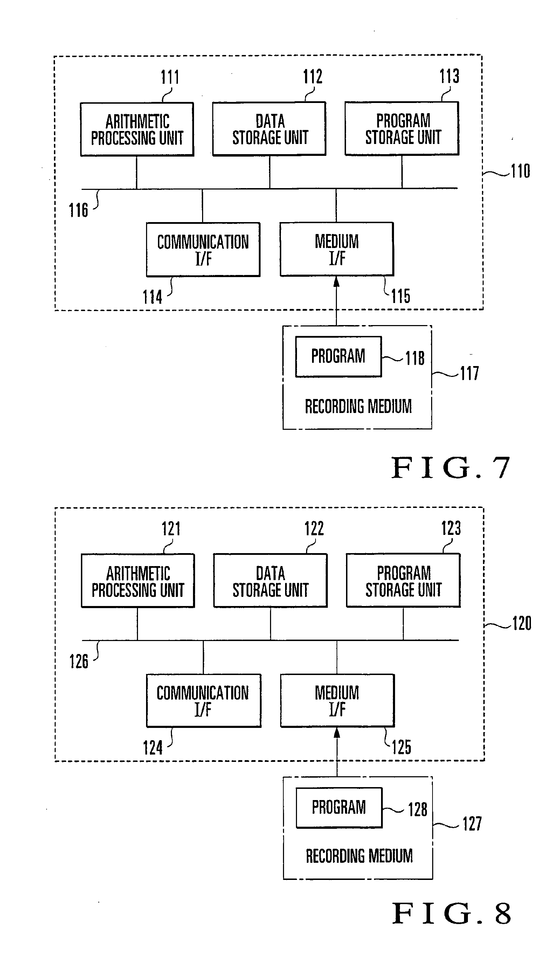

Referring to Fig. 7, a computer 110 included in the image server 10 comprises an arithmetic processing unit 111 formed from, e.g., an MPU, a data storage unit 112 and program storage unit 113 formed from, e.g., a hard disk, a communication interface (I/F) 114 serving as an interface to the network 100, a medium interface (I/F) 115 serving as an interface to a computer-readable recording medium 117, and a bus 116 which connects the units 111 to 115. The computer-readable recording medium 117 is, e.g., a CD-ROM or magneto-optical disk.

A program 118 to control the operation of the computer 110 is stored in the recording medium 117 and provided. When the recording medium 117 is connected to the medium I/F 115, the arithmetic processing unit 111 reads out the program 118 from the recording medium 117 and transfers it to the program storage unit 113. At the start of the operation, the arithmetic processing unit 111 reads out the program 118 from the program storage unit 113 and operates in accordance with the program 118. This implements the functions of the units 11 to 17 of the above-described image server 10.

This also applies to the PTT server 20 and terminal device 30. More specifically, as shown in Fig. 8, a computer 120 included in the PTT server 20 comprises an arithmetic processing unit 121 formed from, e.g., an MPU, a data storage unit 122 and program storage unit 123 formed from, e.g., a hard disk, a communication interface (I/F) 124 serving as an interface to the network 100, a medium interface (I/F) 125 serving as an interface to a recording medium 127 storing a program 128, and a bus 126 which connects the units 121 to 125.

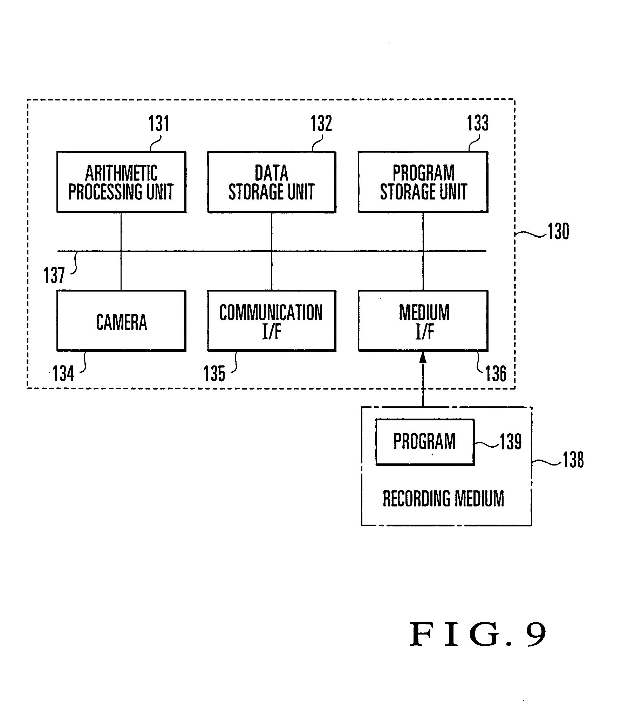

As shown in Fig. 9, a computer 130 included in the terminal device 30 comprises an arithmetic processing unit 131 formed from, e.g., a CPU, a data storage unit 132 and program storage unit 133 formed from, e.g., a hard disk, a camera 134, a communication interface (I/F) 135 serving as an interface to the network 100, a medium interface (I/F) 136 serving as an interface to a recording medium 138 storing a program 139, and a bus 137 which connects the units 131 to 136.

The programs 118, 128, and 139 may be transmitted to another computer system by a transmission wave via a transmission medium such as the Internet or a telephone line.

In the above-described embodiment, a system configuration has been described in which the image server 10 and PTT server 20 are separately present and are connected to each other. However, the present invention is also applicable to a configuration that implements the functions of the two servers by one computer system or a configuration which adds a plurality of server apparatuses in correspondence with functions.

## Claims

1. A broadcasting system **characterized by** comprising:
a server; and
a plurality of terminal devices connected to said server via a network,
each of said terminal devices comprising:
a terminal-side data acquisition unit which acquires, from said server, data, except voice data, transmitted from another terminal device; and
a data output unit which outputs the data acquired by said terminal-side data acquisition unit.

2. A broadcasting system according to claim 1, **characterized in that**
said server comprises:
a server-side data acquisition unit which acquires data, except voice data, transmitted from said other terminal device;
an identification information generation unit which generates identification information of the data acquired by said server-side data acquisition unit; and
an identification information distribution unit which distributes the identification information generated by said identification information generation unit to each of said terminal devices,
said terminal device further comprises an identification information transmission unit which transmits the identification information to said server when the identification information distributed from said server is not held, and
said terminal-side data acquisition unit is configured to acquire data associated with the identification information from said server.

3. A broadcasting system according to claim 2, **characterized in that** said data output unit of said terminal device is configured to output data specified by the identification information distributed from said server when the identification information is already held.

4. A broadcasting system according to claim 1, **characterized in that** said terminal device further comprises a data transmission unit which transmits data except voice data to said server.

5. A server apparatus **characterized by** comprising:
a data acquisition unit which acquires data, except voice data, transmitted from one of a plurality of terminal devices connected via a network;
an identification information generation unit which generates identification information of the data acquired by said data acquisition unit;
an identification information distribution unit which distributes the identification information generated by said identification information generation unit to each of the terminal devices;
an identification information reception unit which receives identification information transmitted from the terminal device when the terminal device does not hold the identification information; and
a data transmission unit which transmits data associated with the identification information received by said identification information reception unit to the terminal device as a transmission source of the identification information.

6. A server apparatus according to claim 5, **characterized by** further comprising:
a database which stores the data acquired by said data acquisition unit and the identification information of the data in association with each other; and
a search unit which searches said database for the data associated with the identification information on the basis of the identification information received by said identification information reception unit,
wherein said data transmission unit is configured to transmit the data searched by said search unit.

7. A server apparatus according to claim 5, **characterized by** further comprising:
a first server including said data acquisition unit and said identification information generation unit; and
a second server including said identification information distribution unit.

8. A terminal device **characterized by** comprising:
a data acquisition unit which acquired, from a server connected via a network, data, except voice data, transmitted from another terminal device; and
a data output unit which outputs the data acquired by said data acquisition unit.

9. A terminal device according to claim 8, **characterized by** further comprising:
an identification information reception unit which receives identification information of data, except voice data, distributed from the server; and
an identification information transmission unit which transmits the identification information to the server when the identification information received by said identification information reception unit is not held,
wherein said data acquisition unit is configured to acquire, from the server, data associated with the identification information.

10. A terminal device according to claim 9, **characterized in that** said data output unit is configured to output data specified by the identification information received by said identification information reception unit when the identification information is already held.

11. A terminal device according to claim 8, **characterized by** further comprising a data transmission unit which transmits data except voice data to the server.

12. A data transmission method **characterized by** comprising the steps of:
causing one terminal device to acquire, from a server connected via a network, data, except voice data, transmitted from another terminal device; and
outputting the acquired data.

13. A data transmission method according to claim 12, **characterized by** further comprising the steps of:
causing said other terminal device to transmit the data except voice data to the server;
causing the server to acquire the data transmitted from said other terminal device;
generating identification information of the acquired data;
distributing the generated identification information to said one terminal device; and
transmitting the identification information to the server when said one terminal device does not hold the identification information distributed from the server,
wherein in the acquiring step, data associated with the identification information is acquired from the server.

14. A data transmission method according to claim 13, **characterized in that** in the outputting step, data specified by the identification information distributed from the server is output when said one terminal device already holds the identification information.

15. A data transmission method according to claim 13, **characterized in that**
the generating step is executed by a first server, and
the distributing step is executed by a second server.

16. A program **characterized by** causing a computer included in a server to execute:
a process of acquiring data, except voice data, transmitted from one of a plurality of terminal devices connected via a network;
a process of generating identification information of the acquired data;
a process of distributing the generated identification information to each of the terminal devices;
a process of receiving the identification information transmitted from the terminal device when the terminal device does not hold the identification information; and
a process of transmitting data associated with the received identification information to the terminal device as a transmission source of the identification information.

17. A program according to claim 16,
**characterized in that**
a first server executes the process of generating the identification information, and
a second server executes the process of distributing the identification information.

18. A program **characterized by** causing a computer included in a terminal device to execute:
a process of acquiring, from a server connected via a network, data, except voice data, transmitted from another terminal device; and
a process of outputting the acquired data.

19. A program according to claim 18, **characterized by** further causing the computer to execute:
a process of receiving identification information of data, except voice data, distributed from the server; and
a process of transmitting the identification information to the server when the received identification information is not held,
wherein in the acquiring process, data associated with the identification information is acquired from the server.

20. A program according to claim 19, **characterized in that** in the outputting process, data specified by the received identification information is output when the identification information is already held.

21. A program according to claim 18, **characterized by** further causing the computer to execute a process of transmitting data except voice data to the server.
